# FASCICULE DE BREVET EUROPEEN

(11) **EP 0 817 561 B1**
(45) Date de publication et mention de la délivrance du brevet: **26.05.1999**
(21) Numéro de dépôt: 96904913.9
(22) Date de dépôt: 27.02.1996
(51) Int. Cl.: A01B 3/46

(54) **CHARRUE SEMI-PORTEE DE GRANDE LONGUEUR A BATI ARTICULE**
LANGER ANHÄNGE PFLUG MIT GEGLIEDERTEM GRINDEL
ELONGATE SEMI-MOUNTED PLOUGH WITH AN ARTICULATED FRAME

(30) Priorité: 28.02.1995 FR 9502458
(43) Date de publication de la demande: 14.01.1998
(73) Titulaire: CHARRUES NAUD S.A., 49600 Andreze (FR)
(72) Inventeur: NAUD, Georges, F-49300 Cholet (FR); MARTIN, Victor, F-49122 Begrolles-en-Mauges (FR); BANCHEREAU, Jean-Paul, F-49600 Andreze (FR); NAUD, Bernard, F-49600 Andreze (FR)
(74) Mandataire: Phélip, Bruno
(86) Numéro de dépôt international: FR9600303
(87) Numéro de publication internationale: WO9626633

(56) Documents cités:
- DE-U- 9 204 130
- FR-A- 2 701 798

## Description

La présente invention concerne un perfectionnement aux charrues semi-portées de grande longueur comportant un bâti muni d'une articulation sur sa longueur et en particulier au niveau du chariot support.

Ce type de charrue est notamment décrit dans le document EP-A-481 883 qui montre les caractéristiques du préambule de la revendication 1.

Il est apparu, lors du transport de ces charrues, que le tronçon arrière, disposé en porte-à-faux derrière le chariot support, générait des contraintes importantes au niveau de la portion du bâti située au droit dudit chariot.

Pour remédier à cet inconvénient, l'invention propose d'établir une souplesse entre le tronçon avant du bâti et le tronçon arrière, en position transport.

L'invention présente l'avantage d'éviter la présence de renforts importants pour maîtriser les contraintes occasionnées par le tronçon arrière qui s'étend en porte-à-faux à partir du chariot support.

Cette même invention présente aussi comme avantage de faciliter les manoeuvres en bout de champ en offrant une certaine souplesse au bâti, au niveau du chariot porteur. La partie avant de la charrue étant relevée, le tracteur peut en effet commencer à amorcer un virage tandis que la partie arrière de la charrue reste en terre pour terminer le labour.

L'invention s'applique à tous types de charrues, réversibles ou non, et notamment aux charrues à bâti articulé dont les tronçons avant et arrière sont maintenus alignés, en permanence, au moyen de butées élastiques du type de celles décrites dans le document précité et positionnées de préférence de part et d'autre du plan médian du bâti de la charrue.

L'invention propose aussi dans une variante de réalisation, de permettre une plus grande amplitude du mouvement latéral lorsque la charrue est en position de travail.

Mais l'invention propose également, selon une autre variante de réalisation, d'accroître à volonté l'amplitude des mouvements entre le tronçon avant et le tronçon arrière en permettant à l'opérateur de gérer ces mouvements selon les besoins.

Ainsi, lors des manoeuvres de retournement par exemple, l'opérateur peut désaligner les deux tronçons et effectuer un recentrage du tronçon arrière sur l'axe de retournement. Il peut également corriger ou modifier l'alignement des deux tronçons pendant l'opération de labour.

L'invention propose aussi, dans le cadre de cette grande souplesse et/ou liberté contrôlée entre les deux tronçons, de permettre le réglage du déport du tronçon arrière par rapport au tronçon avant afin de corriger les variations de largeur de labour au niveau du chariot, c'est-à-dire entre le dernier corps du tronçon avant et le premier corps du tronçon arrière, lorsque l'angle du bâti général change par rapport a l'axe longitudinal d'avancement du fait de variations d'efforts sur les corps de labour par exemple.

Selon l'invention, la charrue comporte un bâti réalisé en deux tronçons qui sont d'une part reliés entre eux, au niveau du chariot support, par un axe transversal qui est disposé horizontalement lorsque la charrue est en position de travail et qui sont, d'autre part, maintenus alignés par un système de butées élastiques ; cette charrue comporte de plus, disposés au niveau de l'axe transversal, des moyens qui permettent un mouvement de basculement vers le bas du tronçon arrière, lorsque la charrue est en position transport, ou latéral lorsque la charrue est en position de travail, lesquels moyens consistent en une liaison ou joint du type cardan aménagée entre lesdits tronçons, laquelle liaison s'effectue par des axes orthogonaux pour garantir la verticalité des plans des contreceps par rapport au sol, dans la position travail.

Selon un premier mode de réalisation, l'axe transversal de liaison est solidaire de l'un des tronçons et il est guidé à l'une de ses extrémités, dans un organe rotulien et, à l'autre extrémité, dans une glissière longitudinale, disposés tous deux sur l'autre tronçon, lequel organe rotulien est, en position normale de transport, situé de préférence au-dessus de ladite glissière.

Selon une variante, l'axe transversal de liaison est solidaire de l'un des tronçons et il est guidé à sa partie centrale dans un organe rotulien et à ses extrémités dans des glissières, lequel organe rotulien et lesquelles glissières étant disposées sur l'autre tronçon.

Selon une autre variante, l'axe transversal de liaison est solidaire de l'un des tronçons et comporte un second axe disposé perpendiculairement, lequel second axe, solidaire de l'autre tronçon, forme, avec le premier, le croisillon d'un joint de cardan.

Toujours selon l'invention, les butées élastiques sont disposées et réparties de part et d'autre du ou des axes d'articulation, en nombre suffisant selon le poids du tronçon arrière, lesquelles butées comprennent au moins un organe élastique proprement dit du type ressort hélicoïdal ou autre, précontraint sur une tige dont l'une des extrémités est ancrée sur l'un des tronçons, lequel organe élastique prend appui sur au moins une paroi solidaire de l'autre tronçon.

Selon une autre disposition préférentielle de l'invention, la butée élastique est constituée d'un organe élastique proprement dit du type ressort hélicoïdal ou autre, positionné sur une tige dont une extrémité est solidaire et articulée sur l'un des tronçons, laquelle tige s'étend longitudinalement et à distance de l'axe transversal d'articulation, lequel organe élastique est d'une part, précontraint entre deux plaques de compression et, d'autre part, retenu entre deux parois dont l'une est fixe, solidaire de l'autre tronçon et dont l'autre est reliée à la première au moyen de tirants sur lesquels elle peut coulisser dans un sens pour se rapprocher de ladite paroi fixe, laquelle paroi mobile constitue simultanément l'une des plaques de compression, l'autre plaque de compression étant disposée entre ladite paroi fixe et ledit organe élastique.

Pour améliorer l'amplitude du mouvement du tronçon arrière par rapport au tronçon avant, sans fatiguer les pièces, les butées élastiques disposées sur le tronçon arrière sont reliées au tronçon avant au moyen d'organes intermédiaires montés sur rotules à chacune de leurs extrémités.

Selon une autre disposition de l'invention, qui permet de réduire le nombre de butées élastiques, l'action des organes intermédiaires sur leur butée correspondante, s'effectue à travers un bras de levier multiplicateur d'efforts, lequel bras est articulé à l'une de ses extrémités sur le tronçon arrière et il reçoit, d'une part, a son autre extrémité, la tige de manoeuvre de la butée élastique et, d'autre part, entre ses deux extrémités, l'une des extrémités dudit organe intermédiaire.

Selon une première disposition, les bras sont situés de part et d'autre du plan médian du tronçon arrière, articulés sur un axe qui est parallèle à l'axe qui est horizontal lorsque la charrue est en position de travail et qui relie les deux tronçons avant et arrière.

Selon une autre disposition, les deux bras sont disposés de part et d'autre du tronçon arrière, articulés sur des axes qui sont cette fois parallèles a l'axe qui est perpendiculaire au sol lorsque la charrue est en position normale de travail.

Selon une autre disposition de l'invention, les organes intermédiaires sont constitues de vérins à vis ou de vérins hydrauliques, ces derniers permettant d'effectuer des manoeuvres au niveau du tronçon arrière.

Selon une autre disposition de l'invention, dans le cas d'une utilisation de deux vérins hydrauliques reliant le tronçon avant aux butées élastiques du tronçon arrière, des moyens d'alimentation de ces vérins sont prévus pour permettre soit une alimentation simultanée qui permet de réaliser des opérations de recentrage du tronçon arrière par rapport à l'axe de retournement, soit séparément pour modifier l'angle entre les deux tronçons, en fonction des nécessités.

Toujours selon l'invention, les butées élastiques peuvent être constituées de vérins hydrauliques munis de dispositifs amortisseurs du type boule d'azote ou, si en plus, elles sont utilisées avec des organes intermédiaires rigides du type vérins à vis, constitués de vérins hydrauliques munis de moyens d'alimentation prévus pour utiliser lesdits vérins soit comme amortisseurs soit comme organes de manoeuvre pour effectuer les manoeuvres de recentrage ou effectuer une modification quelconque de l'angle entre les deux tronçons.

Selon une autre disposition de l'invention, le tronçon arrière est lié au tronçon avant au moyen d'un dispositif complémentaire permettant de réaliser un déport latéral de façon à conserver autant que faire se peut, une largeur de travail constante entre le dernier corps du tronçon avant et le premier corps du tronçon arrière, correspondant à la largeur normale de travail entre deux corps adjacents de l'un ou l'autre des tronçons.

Selon une disposition préférentielle de l'invention, le dispositif de déport est constitué d'une part d'un bras de liaison articulé selon des axes verticaux lorsque la charrue est en position normale de travail, qui sont, pour l'un, l'axe vertical du joint de liaison situé à l'arrière du tronçon avant et, pour l'autre, un axe vertical parallèle au premier, situé en tête du tronçon arrière et, d'autre part, d'un vérin du type à vis ou hydraulique, interposé entre ledit bras et ledit tronçon arrière.

Toujours selon l'invention, pour permettre le réglage du déport du tronçon arrière par rapport au tronçon avant, sans modifier de façon notable le dévers, le bras de liaison entre le joint et le tronçon arrière a une longueur voisine de la longueur moyenne des organes intermédiaires interposés entre le tronçon avant et les butées élastiques ou les bras multiplicateurs selon le mode de réalisation.

L'invention sera encore détaillée à l'aide de la description suivante et des dessins annexés donnés à titre indicatif, et dans lesquels :
- la figure 1 représente, de façon schématique, une portion du bâti de la charrue au niveau du chariot support lequel chariot est représenté pour partie en position transport et pour une autre partie en position travail ;
- la figure 2 est une vue en coupe simplifiée de la figure 1, selon 2-2 et à une échelle plus grande ;
- la figure 3 représente une vue partielle selon 3-3 de la figure 2, à une échelle plus importante, montrant la glissière ;
- les figures 4, 5 et 6 représentent la position des tronçons au niveau de la glissière pour montrer leurs mouvements l'un par rapport à l'autre et l'incidence de ce mouvement sur les butées élastiques ;
- les figures 7 à 12 représentent, de façon schématique, les différents systèmes de liaison du type joints de cardan pour la charrue en position de travail, figures 7, 9 et 11, et en position de transport figures 8, 10 et 12 :
- la figure 13 représente une variante de réalisation dans laquelle les butées élastiques sont reliées au premier tronçon par le biais d'organes intermédiaires;
- la figure 14 correspond à une demi-vue de côté, montrant la liaison entre le tronçon avant et le tronçon arrière avec un dispositif utilisant un bras multiplicateur d'efforts ;
- la figure 15 représente une variante de la figure 13 dans laquelle, pour réduire l'encombrement, le bras multiplicateur d'efforts est parallèle au sol lorsque la charrue est en position normale de labour ;
- la figure 16 représente, en demi-vue, la liaison selon la figure 15 entre les tronçons avant et arrière par le biais du bras multiplicateur placé en position horizontale ;
- la figure 17 représente une autre variante de réalisation dans laquelle le tronçon arrière est relié au tronçon avant au moyen d'un dispositif de réglage du déport ;
- la figure 18 représente une demi-vue de côté montrant un mode de réalisation de la liaison entre le tronçon avant et le tronçon arrière ;
- la figure 19 représente, en demi-vue, une variante de la figure 18 ;
- la figure 20 est une vue de côté partielle, schématique montrant le bras de liaison entre les deux tronçons.

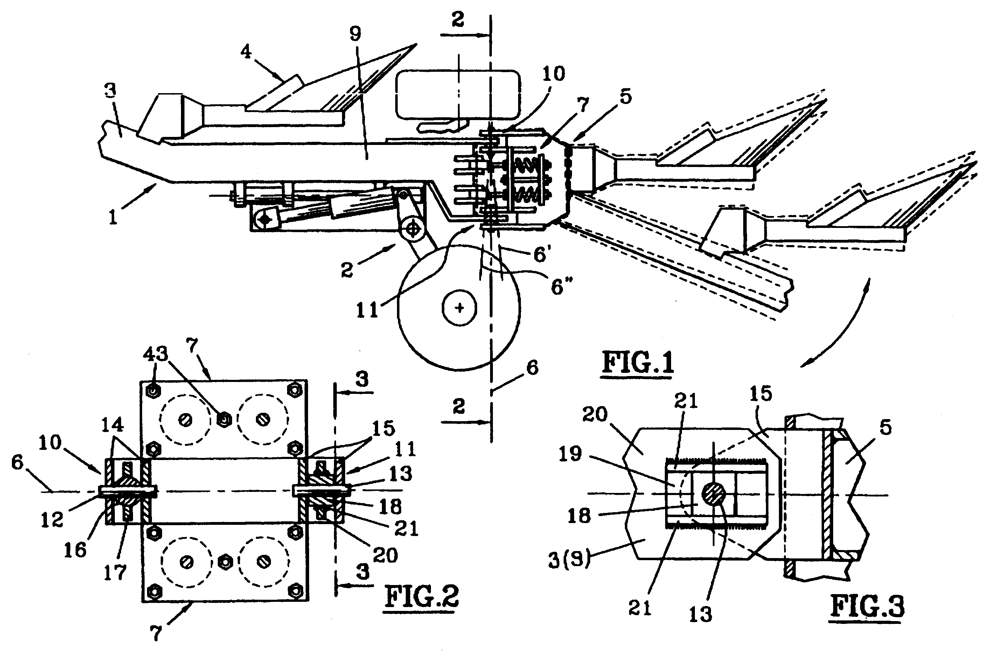

La charrue représentée de façon partielle, figure 1, correspond au type de charrue décrit dans le document EP-A-318 391 et, plus particulièrement, à la charrue détaillée dans le document précité EP-A-481 883.

Cette charrue comprend un bâti repéré 1 d'une manière générale. Ce bâti est normalement relié à un tracteur par l'intermédiaire d'une tête d'attelage, non représentée, et il est porté, à mi-longueur environ, par un chariot 2 que l'on voit, en partie basse de la figure, en position transport et, en partie haute, en position travail.

Ce bâti 1 comprend un tronçon avant 3 muni de corps de labour 4 et un tronçon arrière 5 muni de corps de labour 4 également.

Les deux tronçons 3 et 5 sont liés entre eux au moyen d'un axe 6 disposé transversalement, qui permet, comme détaillé dans les documents précités, d'offrir un débattement au tronçon arrière par rapport au tronçon avant 3, pour suivre les ondes du terrain et conserver un terrage sensiblement constant.

Les deux tronçons 3 et 5 sont maintenus alignés en permanence, au moyen d'un système de butées élastiques 7 qui est notamment décrit dans le document EP-A-481 883 précité. Ce système de butées élastiques 7 présente l'avantage de décharger l'axe de liaison disposé entre les deux tronçons, des efforts de précontrainte des organes élastiques chargés de maintenir alignés lesdits tronçons.

Dans les documents précités, l'axe transversal 6 est horizontal en position de travail et il est dans un plan vertical en position transport ; c'est un axe rigide solidaire à la fois du tronçon avant 3 et du tronçon arrière 5.

En position transport notamment, il maintient rigidement les deux tronçons, sans possibilité de débattement.

Compte-tenu de la masse importante du tronçon arrière 5, disposé en porte-à-faux derrière le chariot 2, le tronçon intermédiaire 9 du bâti 1, disposé au niveau de ce chariot 2 reçoit des efforts importants, ce qui oblige, pour éviter les risques de déformation, voire de rupture, d'utiliser des pièces lourdes et/ou de prévoir des renforts conséquents.

Pour éviter ces problèmes et complications, le tronçon arrière 5 est, selon l'invention, lié de façon élastique au tronçon avant 3.

Selon un premier mode de réalisation, représenté figures 1 à 8, la liaison entre les deux tronçons est constituée d'une part, d'un organe rotulien 10 disposé à la partie supérieure du bâti lorsque la charrue est en position transport, et, d'autre part, d'une glissière de guidage, disposée sous l'organe rotulien, à la partie inférieure des tronçons dans la position transport, laquelle glissière apparaît figure 3 notamment.

De ce fait, l'axe 6 peut prendre des alignements extrêmes 6' et 6'' tout en restant dans le plan médian du bâti, à l'intersection des deux tronçons 3 et 5.

Cette articulation comprend deux tourillons 12 et 13 centrés sur l'axe 6 et montés pour l'un dans une chape 14 du côté de l'organe rotulien 10 et, pour l'autre, dans une chape 15, du côté de la glissière 11. Ces chapes 14 et 15 sont par exemple solidaires du tronçon arrière 5.

Le tourillon 12 est logé dans l'alésage central d'une pièce sphérique ou rotule 16 constituant l'organe rotulien 10, laquelle rotule coopère avec un logement approprié aménagé dans un bras 17 qui prolonge vers l'arrière, le tronçon avant 3 et en particulier le tronçon intermédiaire 9.

Le tourillon 13 est monté dans la chape 15, solidaire du tronçon arrière 5 par exemple. Il tourne dans l'alésage d'une pièce 18 qui est guidée dans une rainure 19 constituant la glissière 11.

La rainure 19 est aménagée dans un bras 20 qui prolonge vers l'arrière le tronçon avant 3 et en particulier le tronçon intermédiaire 9. Cette rainure s'étend longitudinalement dans le plan médian du bâti ; sa longueur est adaptée pour offrir une course de quelques centimètres à la pièce 18, de l'ordre de 10 cm et de préférence entre 5 et 15 cm.

Cette pièce 18 qui apparaît avec une forme carrée, figure 3 constitue une sorte de coulisseau mobile dans la rainure 19 constituant la coulisse ; sa largeur correspond à l'ouverture de la chape.

Des plaques d'usure 21 peuvent être disposées de part et d'autre du coulisseau 18, solidarisé au bras 20 par tout moyen approprié, soudure par exemple. Cette plaque d'usure, et le bras 20, ont une largeur inférieure à l'ouverture de la chape 15, pour permettre un mouvement de l'un par rapport à l'autre selon un arc de circonférence centré sur l'organe rotulien 10.

Cette glissière 11 permet au tronçon arrière 5 d'avoir un débattement autour de l'organe rotulien 10 ; ce débattement est vertical, lorsque la charrue est en position transport, et horizontal lorsqu'elle est en position de travail.

Cette souplesse supplémentaire du bâti de la charrue permet, d'une manière générale, d'adopter une construction plus légère pour le bâti ce qui présente l'avantage de réduire d'une façon notable le poids de l'ensemble.

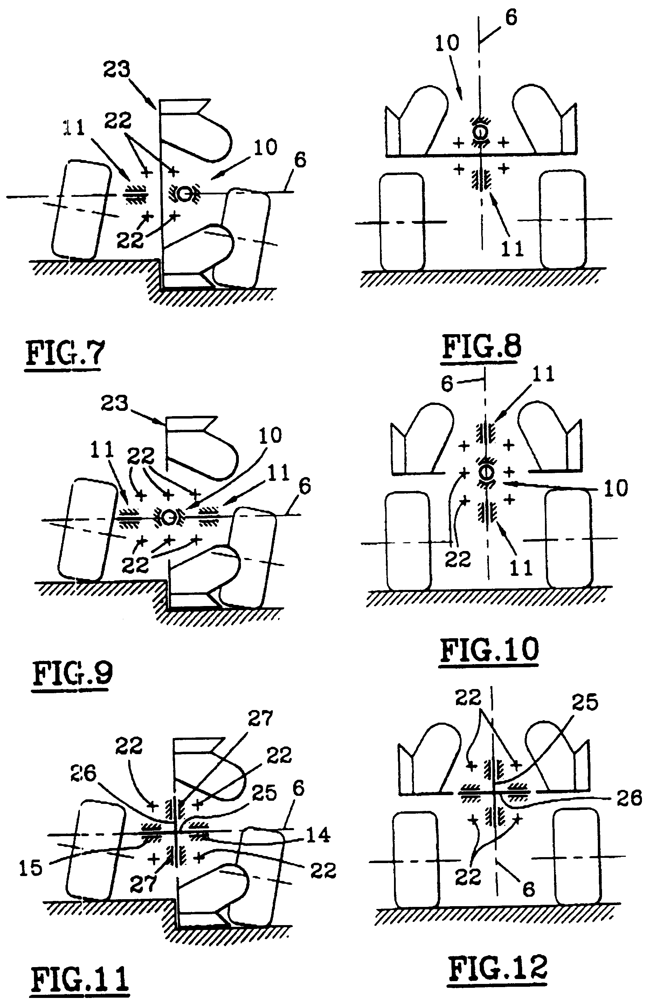

Les figures 7 à 12 représentent les différentes possibilités d'implantation des moyens de liaison et d'articulation entre le tronçon avant 3 et le tronçon arrière 5. On a représenté, de façon schématique, figures 7 et 8, l'organe rotulien 10 et la glissière 11 ainsi que les butées élastiques 7 illustrées au moyen de quatre croix 22.

Figure 7, on remarque que l organe rotulien 10 et la glissière 11 disposés sur l'axe 6, se situent dans un plan horizontal perpendiculaire au plan 23 des contreceps du corps 4.

En position transport, figure 8, on remarque que l'organe rotulien 10 et la glissière 11 sont disposés dans un plan vertical.

Les figures 9 et 10 représentent une variante dans laquelle l'organe rotulien 10 est placé au centre du système de liaison entre le tronçon avant 3 et le tronçon arrière 5 ; deux glissières 11 sont disposées de part et d'autre de l'organe rotulien, dans un plan horizontal passant par ce dernier.

A titre d'exemple, les butées élastiques 7 sont au nombre de six répartis de part et d'autre du plan médian de la charrue c'est-à-dire du plan qui est perpendiculaire au plan 23 passant par les contreceps. En fait l'axe transversal d'articulation 6 se situe dans le plan médian du bâti 1 et en particulier à l'intersection des plans médians des tronçons avant 3 et arrière 5.

La figure 10 représente la charrue en position transport. Les glissières 11 sont disposées au-dessus et en-dessous de l'organe rotulien 10. Les butées élastiques 7 sont disposés de part et d'autre du plan vertical médian.

Les figures 11 et 12 représentent une autre variante dans laquelle la liaison entre les tronçons avant 3 et arrière 5 s'effectue au moyen d'un véritable joint de cardan.

L'articulation autour de l'axe 6 comprend un arbre 25 qui est horizontal lorsque la charrue est en position de travail et vertical lorsqu'elle est en position de transport comme représenté figure 12. Un second arbre 26 perpendiculaire à l'arbre 25, forme avec ce dernier, un croisillon. L'arbre 25 est solidaire des chapes 14 et 15 du tronçon arrière par exemple, alors que l'arbre 26 est solidaire du tronçon avant 3 et en particulier du tronçon intermédiaire 9, au moyen de chapes 27.

Dans cette configuration, les organes élastiques 22 sont disposés autour des axes 25 et 26.

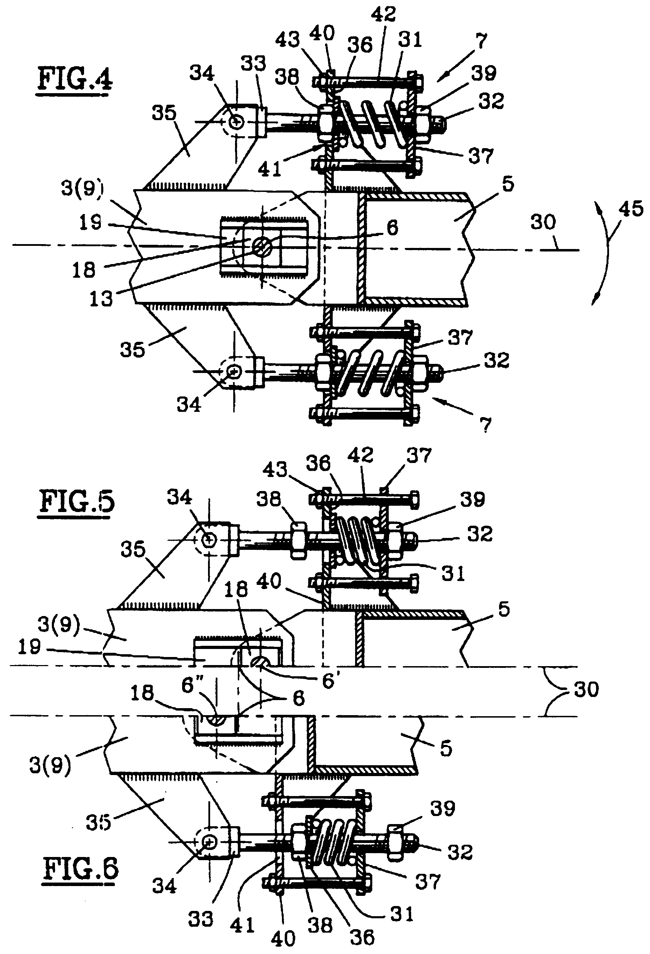

Les figures 4 à 6 illustrent le mouvement du tronçon arrière 5 par rapport au tronçon avant 3.

La figure 4 correspond à une position neutre. On remarque que la pièce 18 qui porte le tourillon 13 est centrée dans la rainure 19, à mi-distance des deux extrémités, sur l'axe 6.

Les butées élastiques 7, disposées au-dessus et en-dessous du plan médian 30 du bâti, maintiennent les tronçons avant 3 et arrière 5 alignés.

Chaque butée élastique 7 est du type à un seul organe élastique, constitué d'un ressort hélicoïdal 31 par exemple.

Ce ressort 31 est comprimé entre deux plaques de compression qui sont montées sur une tige filetée 32 dont une extrémité comporte une douille 33 qui coopère avec un axe 34 monté dans une chape 35 qui est solidaire du tronçon avant 3.

Le ressort 31 est enserré entre une première plaque 36 qui est, sur ces figures, disposée du côté de la douille 33 et une seconde plaque 37 disposée à l'autre extrémité de la tige filetée 32.

Ces deux plaques 36 et 37 sont montées de façon à pouvoir coulisser sur la tige 32.

Le ressort 31 est comprimé entre les plaques 36 et 37, par les écrous 38 et 39 auto-freinés ou bloqués par contre-écrous, qui sont disposés de part et d'autre. Le serrage de ces écrous permet d'effectuer une précontrainte sur le ressort 31.

Cet ensemble constituant un bloc élastique chargé de maintenir les tronçons avant et arrière alignés, est solidaire du tronçon avant par la douille 33 et solidaire du tronçon arrière 5 au moyen d'une paroi 40.

Cette paroi 40 est constituée d'une plaque de tôle fixée sur l'extrémité avant du tronçon arrière 5 perpendiculairement à l'axe médian 30 dudit tronçon et parallèlement à l'axe d'articulation 6 qui passe par les tourillons 12 et 13.

Cette plaque 40 comporte un alésage 41 pour le passage de la tige 32. Cet alésage 41 a un diamètre supérieur au diamètre d'encombrement de l'écrou 38.

La première plaque de compression 36 est en appui sur la plaque 40, sur la face qui est opposée à la face située du côté de la douille 33.

La plaque de compression 37 est retenue à distance de la paroi 40 au moyen de tirants 42. Ces tirants permettent en fait de solidariser le tronçon arrière 5 au bloc élastique constitué notamment par le ressort 31.

Les figures suivantes 5 et 6 montrent le fonctionnement de ces butées élastiques.

La figure 5 représente le mouvement du tronçon arrière dans un sens ; la figure 6 représente le mouvement du tronçon arrière dans l'autre sens, par rapport au tronçon avant.

Dans l'exemple représenté figure 6 et en liaison avec les autres figures et en particulier la figure 1, le tronçon arrière est incliné vers le bas, si la charrue est en position de travail. Le tronçon arrière a effectué un mouvement de pivotement autour de l'organe rotulien 10.

En position travail, on peut observer le même phénomène c'est-à-dire un déplacement des corps de labour 4 vers la gauche de la charrue. C'est cette possibilité de déplacement qui permet d'améliorer le labour en fin de champ par exemple.

Le bloc élastique se comprime, du fait du mouvement du tronçon arrière 5.

Le ressort 31 est comprimé entre la première plaque 36 et la seconde plaque 37 qui est maintenue en position, par l'effet des tirants 42, par rapport à la paroi 40 qui est solidaire du tronçon arrière 5. Cette plaque 40, sous l'effet du mouvement du tronçon arrière 5 s'est avancée par rapport au tronçon avant 3 et ce mouvement a provoqué un avancement de la plaque de compression 37, laquelle plaque 37 provoque un écrasement du ressort 31 contre la première plaque 36 qui est maintenue en position sous l'effet de l'écrou 38 immobile sur la tige filetée 32 qui est maintenue par la douille 33 et l'axe 34 dans une position établie par le tronçon avant 3.

La figure 5 représente un mouvement inverse du tronçon arrière 5.

Dans ce mouvement, le ressort 31 est comprimé, toujours entre la plaque 36 et la plaque 37. Dans ce cas, la paroi 40 se déplace vers la plaque 37. La distance entre cette paroi 40 et l'axe 34 augmente. La plaque 37, retenue par l'écrou 39 sur la tige filetée 32 voit sa distance diminuer par rapport à la paroi 40. Cette plaque 37 est guidée sur les tiges des tirants 42.

De préférence, les tirants 42 sont constitués de boulons dont la partie filetée est positionnée dans un filetage aménagé dans la paroi 40, immobilisée au moyen de contre-écrous 43 par exemple.

Ce système de butées élastiques permet aussi un mouvement autour de l'axe 6, comme prévu dans les documents précités et en particulier dans le brevet EP-A-481 883, lequel mouvement est signalé par la flèche 45 sur la figure 4.

Dans le cas d'une articulation rotulienne, avec glissières comme représenté figure 1, l'amplitude du mouvement du tronçon arrière par rapport au tronçon avant est limitée. Si l'amplitude du mouvement s'accroît, des tensions importantes s'installent dans les tiges 32 qui commandent des butées élastiques.

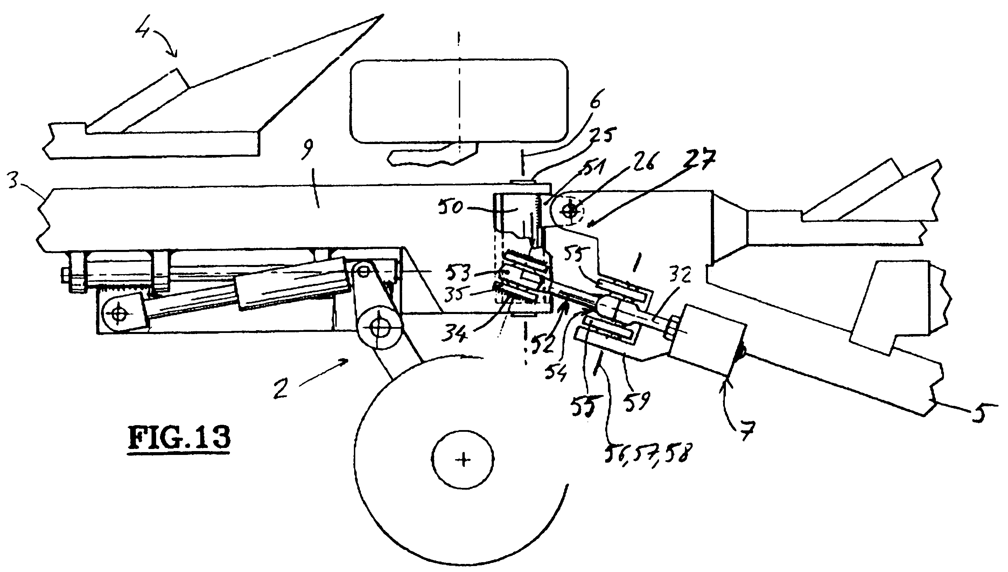

La figure 13 présente une variante qui permet d'accroître l'amplitude des mouvements entre les tronçons avant 3 et arrière 5, sans créer de tensions dans les tiges 32 des butées élastiques 7.

Dans cette variante, on remarque que la liaison entre les deux tronçons avant et arrière s'effectue au moyen d'un joint du type cardan comprenant un arbre ou axe 25 centré sur la ligne d'axe 6 et, perpendiculairement, un arbre ou axe 26.

L'axe 25 est solidaire du tronçon avant 3 et en particulier du tronçon intermédiaire 9. L'axe 26 est solidaire du fourreau 50 monté sur l'axe 25, par l'intermédiaire d'une chape 51.

L'axe 26 est également monté dans une chape 27 qui est aménagée dans la partie avant du tronçon 5.

La butée élastique 7 solidaire du tronçon arrière 5, est reliée à la partie 9 du tronçon avant 3, au moyen d'un organe intermédiaire 52 en forme de tige de liaison, dont les extrémités 53 et 54 sont du type à rotule. L'extrémité 53 coopère avec l'axe 34 monté dans la chape 35 sur la partie 9.

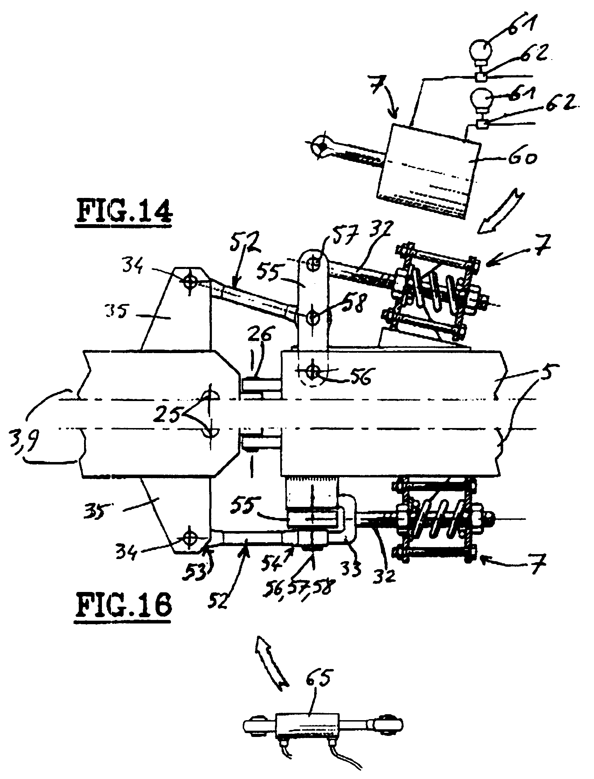

L'extrémité rotulienne 54 peut être liée directement à la tige 32 de la butée élastique 7 ou, comme représenté figure 13 et sur la demi-vue figure 14, à un système de bras 55 qui permet de multiplier les efforts du système de butée 7.

On remarque, figure 14, que le bras 55 est articulé à l'avant du tronçon 5 autour d'un axe 56 qui est parallèle à l'axe 25. Ce bras 55 sert d'intermédiaire entre la tige intermédiaire 52 et la tige 32 de la butée élastique 7. La tige 32 de la butée 7 est montée sur un axe 57 à l'extrémité du bras 55. La tige 52 est articulée sur un axe 58 qui est disposé sur le bras 55, sensiblement à mi-distance des axes 56 et 57.

Les axes 57 et 58 sont de préférence pris entre deux bras 55 et l'axe 56 est monté dans une chape 59 à l'extrémité avant du tronçon 5.

Ce système de bras 55 est disposé de chaque côté du tronçon c'est-à-dire au-dessus et en-dessous lorsque la charrue est en position normale de travail.

La butée élastique 7 peut être du type à ressort comme illustrée figures 4 à 6 ou, comme représentée en variante figure 14, être du type vérin hydraulique 60 avec des dispositifs amortisseurs 61 du type boule d'azote.

L'utilisation d'un vérin 60, de chaque côté du tronçon 5, peut également permettre par des moyens d'alimentation appropriés 62, d'effectuer des manoeuvres du tronçon arrière comme par exemple, grâce à une alimentation simultanée des vérins 60 disposés de part et d'autre du tronçon 5, de faire pivoter ce tronçon autour de l'axe 26 ou, par une action sur l'un ou l'autre des vérins 60, de faire pivoter le tronçon 5 autour de l'axe 25.

Le pivotement du tronçon 5 autour de l'axe 26 provoque un recentrage du tronçon sur l'axe longitudinal de retournement de la charrue ce qui permet de relever les corps situés à l'extrémité arrière du tronçon 5 et d'éviter lors de cette manoeuvre de retournement, que lesdits corps n'entrent en contact avec le sol.

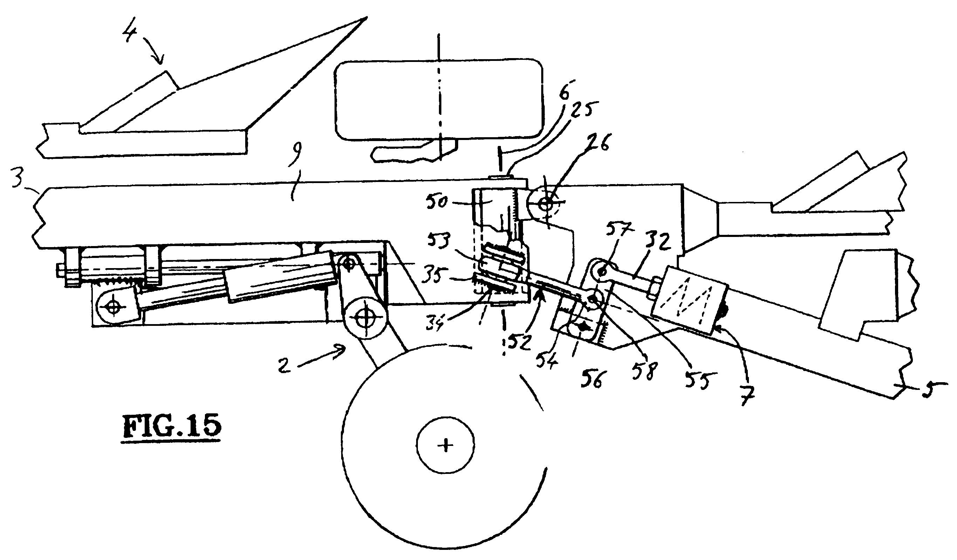

La figure 15 représente une variante de réalisation de la figure 13 dans laquelle, pour réduire l'encombrement des moyens de liaison élastiques entre les deux tronçons avant et arrière, le bras multiplicateur 55 est disposé horizontalement lorsque la charrue est en position de travail.

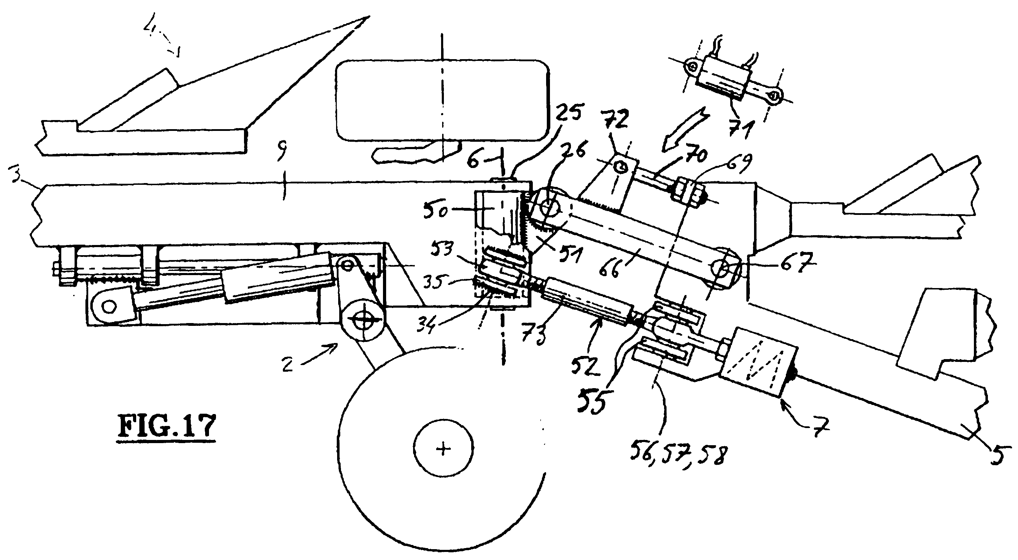

Dans cette configuration, l'axe 56 sur lequel est articulé le bras 55, est parallèle à l'axe 26. Les extrémités rotuliennes 53 et 54 de la tige de liaison 52 sont orthogonales. La butée élastique 7 est disposée à plat sur le tronçon 5, comme représenté figure 16 sur la demi-vue de côté.

La tige 32 de la butée élastique 7 comporte une chape 33 qui enserre le bras 55 auquel est lié par l'axe 57.

Comme pour le montage de la figure 13 et de la figure 14, on retrouve la même disposition des axes 56, 57 et 58.

L'utilisation du bras 55 permet de réduire le nombre de butées élastiques 7 par rapport au mode de réalisation représenté figure 1, grâce à l'effet multiplicateur dudit bras.

La tige 52 peut être remplacée par un vérin hydraulique 65. Ce vérin hydraulique 65 permet, comme explicité précédemment en liaison avec la figure 13, de faire pivoter le tronçon arrière 5 autour de l'axe 26 grâce à une alimentation simultanée des vérins 65 disposés de part et d'autre dudit tronçon. De plus, par une alimentation séparée des vérins 65, on peut modifier l'inclinaison du tronçon arrière 5 par rapport au tronçon avant par un pivotement autour de l'axe 25.

La figure 17 représente un autre mode de réalisation qui permet d'effectuer un réglage de déport du tronçon arrière 5 par rapport au tronçon avant de façon a conserver une largeur de travail entre les corps constante, et en particulier entre le dernier corps du tronçon avant et le premier corps du tronçon arrière.

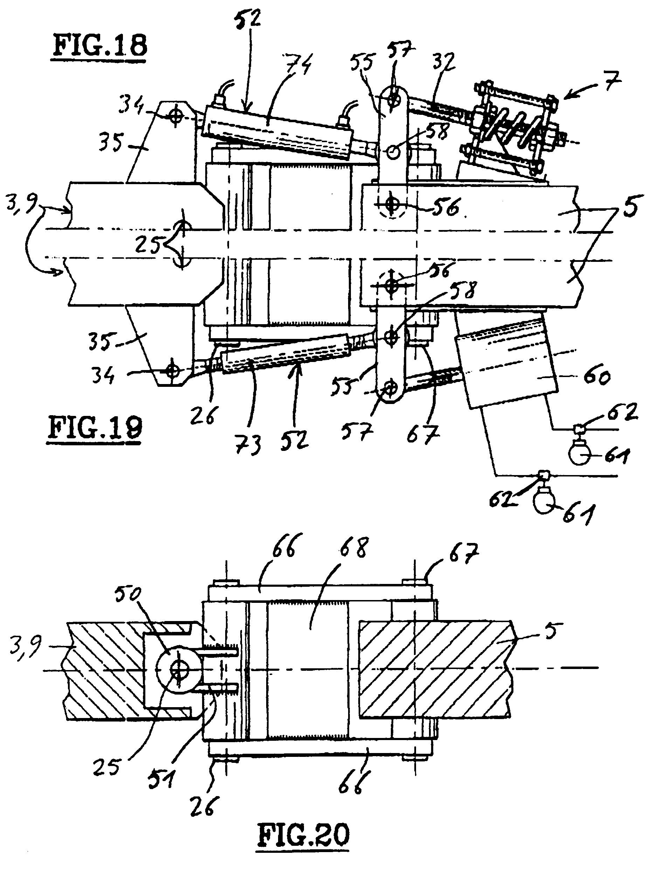

Le tronçon arrière 5 est en fait porté, comme représenté figure 20, par un bras support 66 interposé entre l'axe 26 et un axe 67 situé à la partie avant du tronçon arrière 5. Les deux axes 26 et 67 sont parallèles entre eux et perpendiculaires à l'axe 25. Le bras de liaison 66 est en fait constitué de deux bras disposés de part et d'autre du tronçon 5 et reliés entre eux par un caisson central 68 de rigidification. Pour faciliter le réglage du déport, sans avoir à modifier le réglage du dispositif de liaison élastique, la distance séparant les axes 26 et 67 correspond à la longueur moyenne de l'organe intermédiaire de liaison 52 interposé entre le tronçon avant et le tronçon arrière, lequel organe est également parallèle au bras 56 de façon à former sensiblement un parallélogramme.

Le réglage du déport s'effectue dans ce cas en faisant varier l'angle du bras 66 par rapport au tronçon arrière 5 autour de l'axe 67.

Les moyens de réglage et d'ajustement de ce déport sont constitués d'un vérin à vis 70 ou, selon une variante, d'un vérin hydraulique 71 interposé entre l'extrémité avant du tronçon arrière 5 et une chape 72 aménagée sur le bras 66.

L'alignement entre le tronçon arrière 5 et le tronçon avant s'effectue avec les moyens déjà représentés en liaison avec les figures 13 et 15.

La butée élastique 7 est reliée au tronçon avant au moyen d'un vérin à vis 73 ou, selon une variante, d'un vérin hydraulique 74. Comme représenté, sur la demi-vue figure 19, le vérin à vis est articulé à l'une de ses extrémités sur un axe 34, du côté du tronçon avant 3 et à son autre extrémité sur un axe 58, qui est disposé sensiblement à mi-longueur du bras multiplicateur 55.

De la même façon, figure 18, le vérin 74 est positionné entre l'axe 34 et l'axe 58. Ce vérin 74 permet, lorsqu'il est alimenté simultanément à son homologue situé de l'autre côté du plan de symétrie, d'effectuer un pivotement du tronçon arrière 5 autour de l'axe 26. Lorsque l'un ou l'autre des vérins 74 est alimenté, on effectue un pivotement du tronçon arrière 5 autour de l'axe 25.

Sur la figure 18, la butée élastique 7 est du type de celle détaillée figures 4 à 6. La tige 32 de la butée est articulée à l'extrémité du bras 55, sur un axe 57.

Comme pour le cas des figures 13 et 15, le bras 55 peut être disposé parallèlement à l'axe 25 comme représenté précédemment figure 16 afin de réduire l'encombrement générale de la partie avant du tronçon arrière 5.

Sur la figure 19, en plus du vérin à vis 73, on remarque un vérin hydraulique 60 muni d'amortisseurs du type à boule d'azote 61. Ce vérin hydraulique 60 avec amortisseurs, peut comporter des moyens d'alimentation 62 qui permettent d'obtenir des mouvements particuliers du tronçon arrière 5 comme par exemple son recentrage sur l'axe longitudinal de retournement pour effectuer plus facilement les manoeuvres.

## Revendications

1. Charrue semi-portée de grande longueur constituée d'un bâti (1) réalisé en deux tronçons (3 et 5) qui sont, d'une part, reliés entre eux au niveau du chariot support (2), par un axe transversal (6) qui est disposé horizontalement lorsque la charrue est en position de travail et, d'autre part, maintenus alignés par un système de butées élastiques (7), caractérisée en ce qu'elle comporte des moyens, au niveau dudit axe transversal (6), interposés entre les deux tronçons qui permettent, en position transport notamment, un mouvement de basculement vers le bas du tronçon arrière (5), lesquels moyens consistent en une liaison ou joint du type cardan.

2. Charrue selon la revendication 1, caractérisée en ce que la liaison ou joint du type cardan comprend un organe rotulien (10) et une glissière (11), lequel organe rotulien est disposé à la partie supérieure du bâti (1) lorsque la charrue est en position transport, et ladite glissière (11) à la partie inférieure.

3. Charrue selon la revendication 1, caractérisée en ce que la liaison ou joint de cardan est constitué d'un organe rotulien (10) et de deux glissières (11) disposées de part et d'autre de ce dernier.

4. Charrue selon la revendication 1, caractérisée en ce que la liaison ou joint de cardan est constitué d'un axe (25) confondu avec l'axe (6) et d'un second axe (26) disposé perpendiculairement à l'axe (25), formant ainsi un joint de cardan.

5. Charrue selon l'une quelconque des revendications 2 ou 3, caractérisée en ce que l'organe rotulien (10) comprend une pièce sphérique (16) logée dans un bras (17) solidaire du tronçon avant (3), coopérant avec un courillon (12) solidaire d'une chape (14) située à l'avant du tronçon arrière (5).

6. Charrue selon la revendication 5, caractérisée en ce que la glissière (11) comprend, aménagée dans un bras (20) solidaire du tronçon avant (3), une rainure (19) longitudinale qui accueille une pièce (18) formant coulisseau dans laquelle est logé un tourillon (13) solidaire d'une chape (15) située à l'avant du tronçon arrière (5), laquelle chape a une ouverture suffisante pour permettre le mouvement du bras (20) lors du débattement du tronçon arrière (5) autour de l'organe rotulien (10).

7. Charrue selon l'une quelconque des revendications 1 à 6, caractérisée en ce qu'elle comporte des butées élastiques disposées et réparties de part et d'autre du ou des axes d'articulation, en nombre suffisant.

8. Charrue selon la revendication 7, caractérisée en ce que la butée (7) est constituée d'un organe élastique (31) du type ressort hélicoïdal ou autre, positionné sur une tige (32) dont une extrémité est solidaire et articulée sur l'un des tronçons, laquelle tige (32) s'étend longitudinalement et à une distance de l'axe transversal d'articulation (6), lequel organe élastique (31) est d'une part, précontraint entre deux plaques de compression (36 et 37) et, d'autre part, retenu entre deux parois : une paroi (40) solidaire de l'autre tronçon et une paroi qui correspond à la plaque (37), laquelle plaque (37) est reliée à la paroi (40) au moyen de tirants (42) sur lesquels elle peut coulisser dans un sens pour se rapprocher de ladite paroi fixe (40), l'autre plaque de compression (36) étant disposée contre la paroi fixe (40), entre cette dernière et l'organe élastique (31) ; les deux plaques (36 et 37) peuvent coulisser sur la tige (32) et la paroi (40) comporte un alésage (41) dont le diamètre est suffisant pour permettre le passage de l'écrou de maintien de la plaque (36).

9. Charrue semi-portée de grande longueur selon l'une quelconque des revendications 1 à 8, caracterisée en ce qu'elle comporte des organes intermédiaires (52) interposés entre les butées élastiques (7) qui sont disposées sur le tronçon arrière (5) et le troncon avant, lesquels organes intermédiaires comportent à chacune de leurs extrémités (53, 54), des rotules.

10. Charrue semi-portée de grande longueur selon la revendication 9, caractérisée en ce qu'elle comporte, entre chaque butée élastique (7) et l'organe intermédiaire (52) correspondant, un bras de levier (55) constituant un dispositif multiplicateur d'efforts, lequel bras est articulé à l'une de ses extrémités sur le tronçon arrière (5) et reçoit d'une part à son autre extrémité, la tige (32) servant à manoeuvrer la butée élastique (7) et, d'autre part, entre ses deux extrémités, l'une des extrémités (54) dudit organe intermédiaire (52).

11. Charrue semi-portée de grande longueur selon la revendication 10, caractérisée en ce que les bras multiplicateurs (55) sont situés de part et d'autre du plan médian du tronçon arrière (5) c'est-à-dire du plan passant par l'axe (6), lesquels bras sont articulés sur un axe (56) qui est parallèle audit axe (6).

12. Charrue semi-portée de grande longueur selon la revendication 10, caractérisée en ce que les bras multiplicateurs (55) sont disposés de part et d'autre du tronçon arrière, symétriquement par rapport au plan médian dudit tronçon passant par l'axe d'articulation (6), lesquels bras sont articulés sur des axes (56) qui sont perpendiculaires audit axe (6).

13. Charrue semi-portée de grande longueur selon l'une quelconque des revendications 9 à 12, caractérisée en ce que les organes intermédiaires (52) sont constitués de vérins à vis (73) ou de vérins hydrauliques (65, 74).

14. Charrue semi-portée de grande longueur selon la revendication 13, caractérisée en ce qu'elle comporte, des organes intermédiaires (52) constitués de vérins hydrauliques (65, 74) et de moyens d'alimentation de ces vérins permettant soit une alimentation simultanée des deux vérins (65, 74) pour effectuer des opérations de recentrage du tronçon arrière par rapport à l'axe de retournement de la charrue, soit une alimentation séparée pour modifier l'angle entre les deux tronçons avant et arrière.

15. Charrue semi-portée de grande longueur selon la revendication 13, caractérisée en ce qu'elle comporte des butées élastiques (7) constituées de vérins hydrauliques (60) associés à des dispositifs amortisseurs (61) du type boule d'azote, lesquels vérins hydrauliques (60) peuvent comporter des moyens d'alimentation (62) permettant d'utiliser lesdits vérins soit comme amortisseurs soit comme organes de manoeuvre pour effectuer des manoeuvres de recentrage ou autres lorsque les organes intermédiaires (52) sont par exemple constitués de tiges rigides ou encore de vérins à vis (73).

16. Charrue semi-portée de grande longueur selon l'une quelconque des revendications 1 à 15, caractérisée en ce qu'elle comporte entre le tronçon arrière (5) et le tronçon avant (3), un dispositif complémentaire permettant de réaliser un déport latéral dudit tronçon arrière (5) de façon à conserver une largeur de travail constante entre le dernier corps du tronçon avant et le premier corps du tronçon arrière.

17. Charrue semi-portée de grande longueur selon la revendication 16, caractérisée en ce que le dispositif de déport est constitué d'une part, d'un bras de liaison (66) articulé selon des axes (26 et 67) qui sont verticaux lorsque la charrue est en position normale de travail et qui sont, pour l'un, l'axe vertical (26) du joint de liaison situé à l'arrière du tronçon avant (3) et pour l'autre, un axe vertical parallèle (67) au premier, situé en tête dudit tronçon arrière (5) et, d'autre part, d'un vérin du type à vis (70) ou hydraulique (71), interposé entre ledit bras (66) et ledit tronçon arrière (5).

18. Charrue semi-portée de grande longueur selon l'une quelconque des revendications 16 ou 17, caractérisée en ce qu'elle comporte un bras de liaison (66) dont la longueur correspond sensiblement à la longueur moyenne des organes intermédiaires (52), et qui est parallèle auxdits organes intermédiaires (52) de façon à constituer un parallélogramme.

## Claims

1. A long semi-mounted plough consisting of a frame (1) composed of two sections (3 and 5) which are, on the one hand, linked together at the supporting carriage (2), by a transversal axle (6) arranged horizontally when the plough is in working position and, on the other hand, kept in alignment by a system of elastic stops (7), characterised in that it comprises means, at the said transversal axle (6), interposed between both sections which enable, in transport position particularly, downward tipping of the rear section (5), whereby the said means consist of a universal-type link or joint.

2. A plough according to claim 1, characterised in that the universal-type link or joint comprises a pivoting member (10) and a slide (11), whereas the said pivoting member is arranged at the upper part of the frame (1) when the plough is in transport position and the said slide (11) at the lower part.

3. A plough according to claim 1, characterised in that the universal link or joint consists of a pivoting member (10) and of two slides (11) arranged on either side of the said pivoting member.

4. A plough according to claim 1, characterised in that the universal link or joint consists of an axle (25) combined with the axle (6) and of a second axle (26) arranged perpendicular to the axle (25), thus forming a universal joint.

5. A plough according to any one of claims 2 or 3, characterised in that the pivoting member (10) comprises a spherical piece (16) housed in an arm (17), integral with the front section (3), co-operating with a journal (12), integral with a cap (14) located at the front of the rear section (5).

6. A plough according to claim 5, characterised in that the slide (11) comprises, provided in an arm (20) integral with the front section (3), a longitudinal groove (19) which accommodates a part forming a ram in which is provided a journal (13) integral with a cap (15) located at the front of the rear section (5), whereas the aperture of the said cap is wide enough to enable movement of the arm (20) when the rear section (5) passes around the pivoting member (10).

7. A plough according to any one of claims 1 to 6, characterised in that it comprises elastic stops arranged and provided on either side of the articulation axle(s), sufficient in number.

8. A plough according to claim 7, characterised in that the stop (7) consists of an elastic stop (31), such as a helical spring or equivalent, positioned on a rod (32), one end of which is integral and articulated on one of the sections, whereby the said rod (32) extends lengthwise and at a distance from the transversal articulation axle (6), whereas the said elastic member (31) is, on the one hand, preloaded between two compression plates (36 and 37) and, on the other hand, maintained between two walls : a wall (40) integral with the other section and a wall which corresponds to the plate (37), whereby the said plate (37) is linked with the wall (40) via ties (42) on which the said plate may slide in a direction to come closer to the said fixed wall (40), whereas the other compression plate (36) is provided against the fixed wall (40), between the latter and the elastic member (31); both plates (36 and 37) can slide on the rod (32) and the wall (40) comprises a bore (41) whose diameter is sufficient to enable the nut retaining the plate (36) to come through.

9. A long semi-mounted plough according to any one of claims 1 to 8, characterised in that it comprises intermediate members (52) interposed between the elastic stops (7) which are provided on the rear section (5) and the front section, whereby the said intermediate members comprise pivots at each of their ends (53, 54).

10. A long semi-mounted plough according to claim 9, characterised in that it comprises, between each elastic stop (7) and the corresponding intermediate member (52), a lever arm (55) forming a load multiplier device, whereas the said arm is articulated at one of its ends on the rear section (5) and receives on the one hand at its other end, the rod (32) used to operate the elastic stop (7), and on the other hand, between both its ends, one end (54) of the said intermediate member (52).

11. A long semi-mounted plough according to claim 10, characterised in that the multiplier arms (55) are located on either side of the medium plane of the rear section (5), i.e. of the plane going through the axle (6), whereas the said arms are articulated on an axle (56) parallel to the said axle (6).

12. A long semi-mounted plough according to claim 10, characterised in that the multiplier arms (55) are provided on either side of the rear section, symmetrically to the medium plane of the said section going through the articulation axle (6), whereas the said arms are articulated on axes (56) which are perpendicular to the said axle (6).

13. A long semi-mounted plough according to any one of claims 9 to 12, characterised in that the intermediate members (52) consist of screw jacks (73) or of hydraulic jacks (65, 74).

14. A long semi-mounted plough according to claim 13, characterised in that it comprises intermediate members (52) consisting of hydraulic jacks (65, 74) and of means supplying these jacks, allowing either simultaneous supplying of both jacks (65, 74) for realignment manoeuvres of the rear section with regard to the tipping axle of the plough or separate supplying in order to modify the angle between both front and rear sections.

15. A long semi-mounted plough according to claim 13, characterised in that it comprises elastic stops (7) consisting of hydraulic jacks (60) connected to nitrogen ball-type dampening devices (61), whereas the said hydraulic jacks (60) may contain supply means (62) enabling to use the said jacks either as dampening devices or control members for re-alignment manoeuvres or otherwise when the intermediate members (52) consist for instance of rigid rods or still of screw jacks (73).

16. A long semi-mounted plough according to any one of claims 1 to 15, characterised in that it comprises between the rear section (5) and the front section (3), a complementary device enabling lateral offsetting of the said rear section (5) in order to maintain constant working width between the last body of the front section and the first body of the rear section.

17. A long semi-mounted plough according to claim 16, characterised in that the offsetting device consists on the one hand, of a linking arm (66) articulated according to axes (26 and 67) which are vertical when the plough is in normal working position and which are, as regards the former, the vertical axle (26) of the linking joint located at the rear of the front section (3) and, as regards the latter, a vertical axle (67) parallel to the former, located at the front of the rear section (5) and, on the other hand, of a screw jack (70) or of a hydraulic jack (71), interposed between the said arm (66) and the said rear section (5).

18. A long semi-mounted plough according to any one of claims 16 or 17, characterised in that it comprises a linking arm (66) whose length corresponds substantially to the average length of the intermediate members (52), and which is parallel to the said intermediate members (52) in order to form a parallelogram.

## Patentansprüche

1. Halbgestützter Pflug von großer Länge, umfassend einen Rahmen (1), der aus zwei Teilstücken (3 und 5) ausgeführt ist, die einerseits untereinander auf der Höhe des Stützwagens (2) durch eine Querachse (6) verbunden sind, die waagerecht angeordnet ist, wenn der Pflug in Arbeitsposition ist und die andererseits durch ein System von elastischen Längslagern (7) ausgerichtetgehalten werden, dadurch gekennzeichnet, daß er auf der Höhe der Querachse (6) Mittel umfaßt, die zwischen den beiden Teilstücken angebracht sind, welche besonders in der Transportposition eine Kippbewegung des hinteren Teilstückes (5) nach unten ermöglichen, wobei die Mittel aus einer kardanartigen Verbindung oder einein kardanartigen Gelenk bestehen.

2. Pflug nach Anspruch 1, dadurch gekennzeichnet, daß die kardanartige Verbindung oder das kardanartige Gelenk ein Kugelkopfelement (10) und eine Führungsschiene (11) umfaßt, wobei, wenn der Pflug in Transportposition ist, das Kugelkopfelement am oberen Teil des Rahmens (1) und die Führungsschiene (11) am unteren Teil angebracht ist.

3. Pflug nach Anspruch 1, dadurch gekennzeichnet, daß die kardanartige Verbindung oder das kardanartige Gelenk ein Kugelkopfelement (10) und zwei Führungsschienen (11) aufweist, die auf beiden Seiten des letzteren angeordnet sind.

4. Pflug nach Anspruch 1, dadurch gekennzeichnet, daß die kardanartige Verbindung oder das kardanartige Gelenk aus einer Achse (25), die der Achse (6) gleich ist, und einer zweiten Achse (26), die senkrecht zur Achse (25) angebracht ist, gebildet ist, wobei so ein Kardangelenk gebildet ist.

5. Pflug nach einem der Ansprüche 2 oder 3, dadurch gekennzeichnet, daß das Kugelkopfelement (10) einen kugelförmigen Teil (16) umfaßt, der in einem Arm (17) aufgenommen ist, welcher mit dem vorderen Teilstück (3) fest verbunden ist, und mit einem Zapfen (12) zusammenwirkt, der mit einem Deckel (14) fest verbunden ist, welcher sich vor dem hinteren Teilstück (5) befindet.

6. Pflug nach Anspruch 5, dadurch gekennzeichnet, daß die Führungsschiene (11) eine Längsrille (19), angebracht in einem Arm (20), der mit dem vorderen Teilstück (3) fest verbunden ist, umfaßt, die ein Teil (18) aufnimmt, das einen Schieber bildet, in dem ein Zapfen (13) untergebracht ist, der fest mit einem Deckel (15) verbunden ist, der sich vor dem hinteren Teilstück (5) befindet wobei der Deckel eine Öffnung aufweist, die ausreicht, um die Bewegung des Armes (20) beim Ausschlag des hinteren Teilstuckes (5) uni das Kugelkopfelement herum (10) zu ermöglichen.

7. Pflug nach einen, der Ansprüche 1 bis 6, dadurch gekennzeichnet, daß er elastische Längslager umfaßt, die auf beiden Seiten der Gelenkachse oder der Gelenkachsen in ausreichender Anzahl angeordnet und verteilt sind.

8. Pflug nach Anspruch 7, dadurch gekennzeichnet, daß das Längslager (7) ein elastisches Element (31), wie eine Schraubenfeder, oder anderes umfaßt, das auf einem Bolzen (32) angebracht ist, von dem ein Ende mit einem der Teilstücke fest und durch ein Gelenk (32) verbunden ist, wobei der Bolzen (32) sich der Länge nach und in einem Abstand zur Gelenkquerachse (6) ausdehnt, wobei das elastische Element (31) einerseits zwischen zwei Druckplatten (36 und 37) vorgespannt und andererseits zwischen zwei Wänden festgehalten ist; einer Wand (40), die fest mit dem anderen Teilstück verbunden ist, und einer Wand, die der Platte (37) entspricht, wobei die Platte (37) mit der Wand (40) mit Hilfe von Zugstangen (42) verbunden ist, auf denen sie in einer Richtung verschoben werden kann, um sich an die feste Wand (40) anzunähern, wobei die andere Druckplatte (36) gegen die feste Wand (40), zwischen der letzteren und dem elastischen Element, (31) angeordnet ist; die beiden Platten (36 und 37) können auf dem Bolzen (32) verschoben werden, und die Wand (40) weist eine Bohrung (41) auf, deren Durchmesser ausreichend groß ist, um den Durchgang der Halteschraubenmutter der Platte (36) zu ermöglichen.

9. Halbgestützter Pflug von großer Länge nach einem der Ansprüche 1 bis 8, dadurch gekennzeichnet, daß er Zwischenelemente (52) umfaßt, die zwischen den elastischen Längslagern (7) angeordnet sind, die auf dem hinteren Teilstück (5) und dem vorderen Teilstück angebracht sind, wobei diese Zwischenelemente an jedem ihrer Enden (53, 54) Kugelköpfe aufweisen.

10. Halbgestützter Pflug von großer Länge nach Anspruch 9, dadurch gekennzeichnet, daß er zwischen jedem elastischen Längslager (7) und dem entsprechenden Zwischenelement (52) einen Hebelarm (55) umfaßt, der eine Kraftvervielfachungsvorrichtung darstellt, wobei der Arm an einem seiner Enden mit dem hinteren Teilstück (5) beweglich verbunden ist und einerseits an seinem anderen Ende den Bolzen (32) aufnimmt, der dazu dient, das elastische Längslager (7) zu betätigen, und andererseits zwischen seinen beiden Enden eines der Enden (54) des Zwischenelementes (52) aufnimmt.

11. Halbgestützter Pflug von großer Länge nach Anspruch 10, dadurch gekennzeichnet, daß die Vervielfachungsarme (55) sich auf beiden Seiten der mittleren Ebene des hinteren Teilstückes (5) befinden, d.h. der Ebene, die durch die Achse (6) verläuft, wobei diese Arme mit einer Achse (56), die zur Achse (6) parallel ist, beweglich verbunden sind.

12. Halbgestützter Pflug von großer Länge nach Anspruch 10, dadurch gekennzeichnet, daß die Vervielfachunsarme (55) auf beiden Seiten des hinteren Teilstückes symmetrisch in bezug auf die mittlere Ebene des Teilstückes, die durch die Gelenkachse (6) verläuft, angeordnet sind, wobei die Arme mit den Achsen (56), die zur Achse (6) senkrecht sind, beweglich verbunden sind.

13. Halbgestützter Pflug von großer Länge nach einem der Ansprüche 9 bis 12, dadurch gekennzeichnet, daß die Zwischenelemente (52) Schraubenwinden (73) oder hydraulische Winden (65, 74) umfassen.

14. Halbgestützter Pflug von großer Länge nach Anspruch 13, dadurch gekennzeichnet, daß er Zwischenelemente (52) umfaßt, die hydraulische Winden (65, 74) sowie Versorgungsmittel dieser Winden aufweisen, die entweder eine gleichzeitige Versorgung der beiden Winden (65, 74) erlauben, um Vorgänge der Neuzentrierung des hinteren Teilstückes in bezug auf die Umdrehungsachse des Pfluges auszuführen, oder eine getrennte Versorgung, um den Winkel zwischen den beiden Teilstücken vorne und hinten zu verändem.

15. Halbgesützter Pflug von großer Länge nach Anspruch 13, dadurch gekennzeichnet, daß er elastische Längslager (7) umfaßt, die hydraulische Winden (60) aufweisen, welche mit Dämpfungsvorrichtungen (61), wie Stickstoffkugeln, versehen sind, wobei die hydraulischen Winden (60) Versorgungsmittel umfassen (62) können, welche es erlauben, die Winden entweder als Dämpfer oder als Bedienungselemente zu benutzen, um Vorgänge der Neuzentrierung oder andere auszuführen, wenn die Zwischenelemente (52) z.B. starre Bolzen oder auch Schraubenwinden (73) umfassen.

16. Halbgestützter Pflug von großer Länge nach einem der Ansprüche 1 bis 15, dadurch gekennzeichnet, daß er zwischen dem hinteren Teilstück (5) und dem vorderen Teilstück (3) eine zusätzliche Vorrichtung umfaßt, die es erlaubt, eine seitliche Verschiebung des hinteren Teilstückes (5) auszuführen, so daß eine beständige Arbeitsbreite zwischen dem letzten Körper des vorderen Teilstückes und dem ersten Körper des hinteren Teilstückes beibehalten wird.

17. Halbgestützter Pflug von großer Länge nach Anspruch 16, dadurch gekennzeichnet, daß die Verschiebungseinrichtung einerseits einen Verbindungsarm (66) umfaßt, der mit den Achsen (26 und 67) beweglich verbunden ist, die senkrecht stehen, wenn der Pflug sich in normaler Arbeitsposition befindet, und die zum einen die senkrechte Achse (26) des Verbindungsgelenkes, das sich hinten am vorderen Teilstück (3) befindet, und zum anderen eine zur ersten Achse parallele senkrechte Achse (67), die sich vorne am hinteren Teilstuck (5) befindet, sind, und andererseits eine Schrauben- (70) oder hydraulische (71) Winde, die zwischen dem Arm (66) und dem hinteren Teilstück (5) angeordnet ist, umfaßt.

18. Halbgestützter Pflug von großer Länge nach einem der Ansprüche 16 oder 17, dadurch gekennzeichnet, daß er einen Verbindungsarm (66) umfaßt, dessen Länge ungefähr der mittleren Länge der Zwischenelemente (52) entspricht, und der zu den Zwischenelementen (52) parallel verläuft, derart, daß er ein Parallelogramm bildet.
